# EUROPEAN PATENT APPLICATION

(11) **EP 4 790 818 A1**
(43) Date of publication of application: **12.08.2026**
(21) Application number: 25867251.8
(22) Date of filing: 29.10.2025
(51) Int. Cl.: H01M 50/383, H01M 50/24, H01M 50/367, H01M 50/242, H01M 50/342

(54) **BATTERY MODULE AND BATTERY PACK COMPRISING SAME**

(30) Priority: 31.10.2024 KR 20240151941
(71) Applicant: LG ENERGY SOLUTION, LTD., Seoul 07335 (KR)
(72) Inventor: JEONG, Dong Ik, Daejeon 34122 (KR); KIM, Soo Youl, Daejeon 34122 (KR); PARK, Gi Chan, Daejeon 34122 (KR)
(74) Representative: BCKIP Part mbB
(86) International application number: PCT/KR2025/017426
(87) International publication number: WO 2026/095603

(57) **Abstract**

The technical idea of the present disclosure provides a battery module including: a cell block including a plurality of battery cells; a module case including a bottom plate facing a bottom surface of the cell block, a first side plate facing a first side surface of the cell block, a second side plate facing a second side surface of the cell block, and a top plate facing an upper surface of the cell block; a front frame facing a front surface of the cell block; a rear frame facing a rear surface of the cell block and including a gas discharge hole; and a fire extinguishing cover including an upper cover portion between the upper surface of the cell block and the top plate, and a side cover portion between the rear surface of the cell block and the rear frame.

## Description

### [Technical Field]

The present disclosure relates to a battery module and a battery pack comprising the same.

This application claims the benefit of priority from Korean Patent Application No. 10-2024-0151941, filed on October 31, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

As secondary batteries are used in mobility, the demand for safety of secondary batteries is increasing. When accidents such as a fire occur in secondary batteries used in mobility, the lives of drivers can be endangered. Therefore, research into technologies for improving the safety of secondary batteries is indispensable.

### [Summary]

### [Technical Problem]

The technical problem to be solved by the technical idea of the present disclosure is to provide a battery module and a battery pack comprising the same.

### [Technical Solution]

In order to solve the above-described problem, the technical idea of the present disclosure provides a battery module comprising: a cell block comprising a plurality of battery cells; a module case comprising a bottom plate facing a bottom surface of the cell block, a first side plate facing a first side surface of the cell block, a second side plate facing a second side surface of the cell block, and a top plate facing an upper surface of the cell block; a front frame facing a front surface of the cell block; a rear frame facing a rear surface of the cell block and comprising a gas discharge hole; and a fire extinguishing cover comprising an upper cover portion between the upper surface of the cell block and the top plate, and a side cover portion between the rear surface of the cell block and the rear frame.

In exemplary embodiments, the side cover portion of the fire extinguishing cover comprises a plurality of slits, and the plurality of slits of the side cover portion of the fire extinguishing cover each accommodate one end of a corresponding battery cell among the plurality of battery cells.

In exemplary embodiments, the battery module further comprises an insulating filling layer that at least partially fills a space between each of the plurality of battery cells and the front frame.

In exemplary embodiments, each of the plurality of battery cells comprises a cell case having an accommodation space for accommodating an electrode assembly, the cell case comprises a sealing portion for sealing the accommodation space of the cell case, and the insulating filling layer is in contact with the sealing portion of the cell case.

In exemplary embodiments, each of the plurality of battery cells further comprises an electrode lead protruding to the outside of the cell case through a portion of the sealing portion of the cell case in contact with the insulating filling layer.

In exemplary embodiments, the insulating filling layer comprises a resin.

In exemplary embodiments, the battery module further comprises an adhesive layer provided between the bottom plate and the cell block and attaching the cell block to the bottom plate, each of the plurality of battery cells comprises a cell case having an accommodation space for accommodating an electrode assembly, the cell case comprises a sealing portion for sealing the accommodation space of the cell case, and the adhesive layer is in contact with the sealing portion of the cell case.

In exemplary embodiments, the battery module further comprises: an insulating filling layer that at least partially fills a space between each of the plurality of battery cells and the front frame; and an adhesive layer provided between the bottom plate and the cell block and attaching the cell block to the bottom plate.

In exemplary embodiments, each of the plurality of battery cells comprises a cell case having an accommodation space for accommodating an electrode assembly, a first electrode lead protruding from a first end of the cell case facing the rear frame, and a second electrode lead protruding from a second end of the cell case facing the front frame, the cell case comprises a sealing portion for sealing the accommodation space of the cell case, and the sealing portion of the cell case comprises: a first sealing portion provided at a bottom of the cell case facing the bottom plate and in contact with the adhesive layer; a second sealing portion provided at the first end of the cell case; and a third sealing portion provided at the second end of the cell case and in contact with the insulating filling layer.

In exemplary embodiments, the fire extinguishing cover contains a fire extinguishing material.

In exemplary embodiments, the plurality of battery cells are arranged in a first direction, and the cell block further comprises an inter-cell pad disposed between two adjacent battery cells among the plurality of battery cells.

In order to solve the above-described problem, the technical idea of the present disclosure provides a battery pack comprising: a pack housing; and a battery module mounted on the pack housing, wherein the battery module comprises: a cell block comprising a plurality of battery cells; a module case comprising a bottom plate facing a bottom surface of the cell block, a first side plate facing a first side surface of the cell block, a second side plate facing a second side surface of the cell block, and a top plate facing an upper surface of the cell block; a front frame facing a front surface of the cell block; a rear frame facing a rear surface of the cell block and comprising a gas discharge hole; an insulating filling layer that at least partially fills a space between each of the plurality of battery cells and the front frame; an adhesive layer provided between the bottom plate and the cell block and attaching the cell block to the bottom plate; and a fire extinguishing cover provided between the upper surface of the cell block and the top plate and between the rear surface of the cell block and the rear frame.

In exemplary embodiments, the fire extinguishing cover comprises a plurality of slits, and the plurality of slits of the fire extinguishing cover each accommodate one end of a corresponding battery cell among the plurality of battery cells.

In exemplary embodiments, each of the plurality of battery cells comprises a cell case having an accommodation space for accommodating an electrode assembly, a first electrode lead protruding from a first end of the cell case facing the rear frame, and a second electrode lead protruding from a second end of the cell case facing the front frame, the cell case comprises a sealing portion for sealing the accommodation space of the cell case, and the sealing portion of the cell case comprises: a first sealing portion provided at a bottom of the cell case facing the bottom plate and in contact with the adhesive layer; a second sealing portion provided at the first end of the cell case; and a third sealing portion provided at the second end of the cell case and in contact with the insulating filling layer.

In exemplary embodiments, the adhesive layer extends along the first sealing portion of the cell case, and the insulating filling layer extends along the third sealing portion of the cell case.

### [Advantageous Effects]

According to a battery module in accordance with exemplary embodiments, since directional venting that discharges gas and flame in a specific direction can be achieved, the gas and the flame can be efficiently controlled at a module level and a pack level.

According to the battery module in accordance with exemplary embodiments, since a fire extinguishing cover configured to extinguish a flame generated upon ignition of a battery cell is disposed at an end of the battery cell to which gas venting is directed, the ignition of the battery cell can be effectively mitigated.

The effects that can be obtained in exemplary embodiments of the present disclosure are not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view illustrating a battery module according to exemplary embodiments.
FIG. 2 is an exploded perspective view illustrating a battery module according to exemplary embodiments.
FIG. 3 is a side view illustrating a battery cell provided in a battery module according to exemplary embodiments.
FIG. 4 is a cross-sectional view illustrating a battery module according to exemplary embodiments.
FIG. 5 is a side view illustrating a portion of a battery module according to exemplary embodiments.
FIG. 6 is a plan view illustrating a portion of a battery module according to exemplary embodiments.
FIG. 7 is a plan view illustrating a battery pack according to exemplary embodiments.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

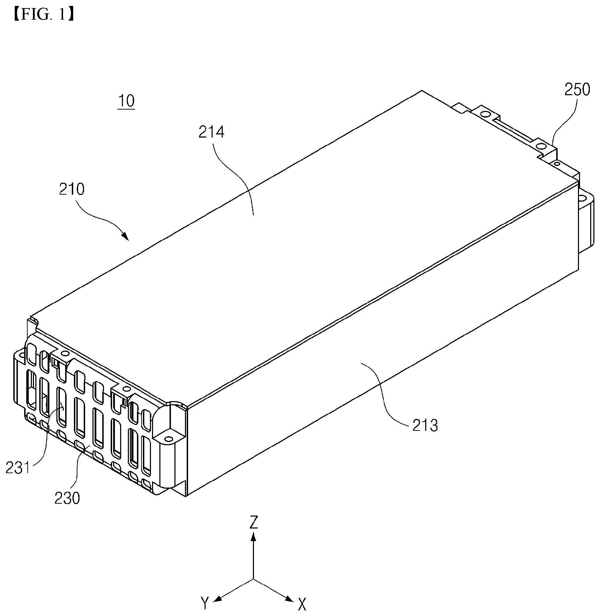

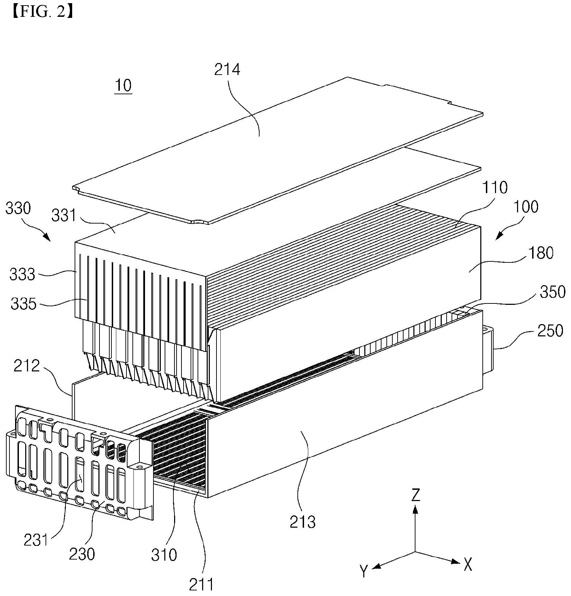

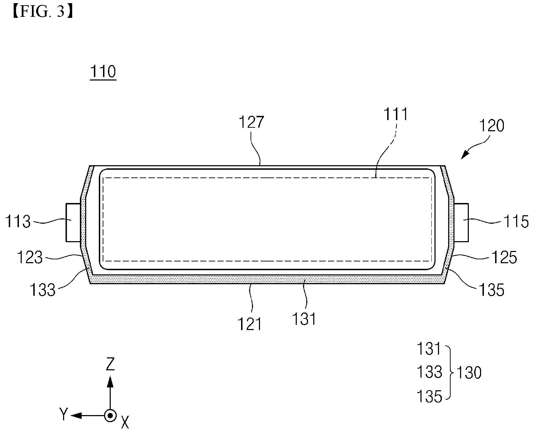

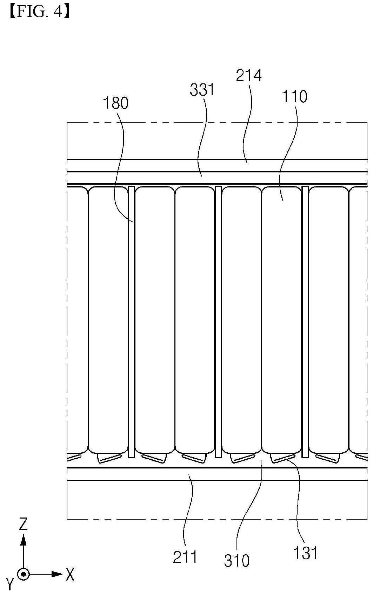

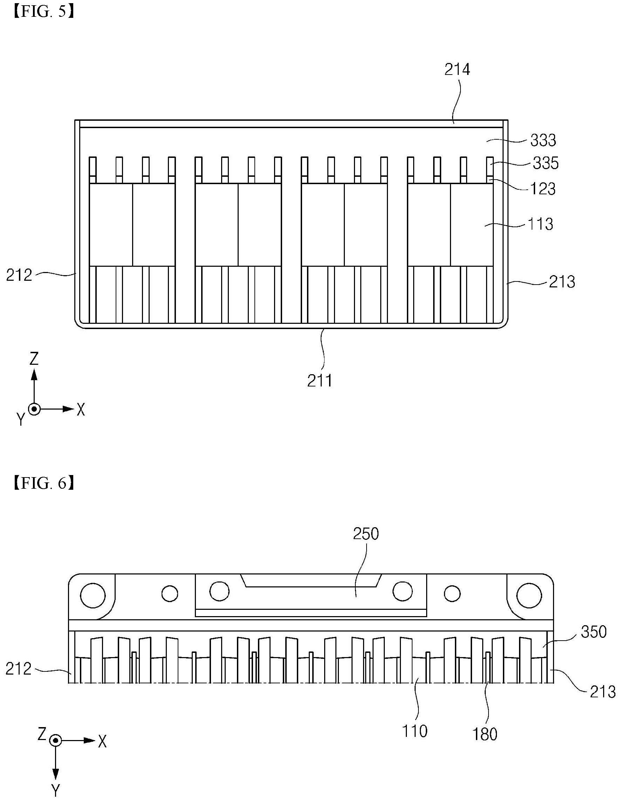

FIG. 1 is a perspective view illustrating a battery module 10 according to exemplary embodiments. FIG. 2 is an exploded perspective view illustrating a battery module 10 according to exemplary embodiments. FIG. 3 is a side view illustrating a battery cell 110 provided in a battery module 10 according to exemplary embodiments. FIG. 4 is a cross-sectional view illustrating a battery module 10 according to exemplary embodiments. FIG. 5 is a side view illustrating a portion of a battery module 10 according to exemplary embodiments.

Referring to FIG. 1 to FIG. 5, the battery module 10 may comprise a cell block 100, a module case 210, a rear frame 230, a front frame 250, an adhesive layer 310, and a fire extinguishing cover 330.

The cell block 100 may comprise a plurality of battery cells 110.

The individual battery cell 110 is a basic unit of a lithium-ion battery, i.e., a secondary battery. The individual battery cell 110 may comprise an electrode assembly 111, an electrolyte, and a cell case 120. The electrode assembly 111 housed in the cell case 120 may comprise a positive electrode, a negative electrode, and a separator interposed between the positive electrode and the negative electrode. The electrode assembly 111 may be any one of a jelly-roll type and a stack type depending on an assembly form. A jelly-roll type electrode assembly 111 may comprise a winding structure of a positive electrode, a negative electrode, and a separator interposed therebetween. A stack type electrode assembly 111 may comprise a plurality of positive electrodes, a plurality of negative electrodes, and a plurality of separators interposed therebetween, which are sequentially stacked. A positive electrode may comprise a positive electrode current collector and a positive electrode active material. A negative electrode may comprise a negative electrode current collector and a negative electrode active material.

The individual battery cell 110 may correspond to a pouch-type battery cell, a cylindrical battery cell, or a prismatic battery cell. The electrode assembly 111 of the pouch-type battery cell is housed in a pouch case comprising an aluminum laminate sheet. The electrode assembly 111 of the cylindrical battery cell is housed in a cylindrical metal can. The electrode assembly 111 of the prismatic battery cell is housed in a prismatic metal can.

The plurality of battery cells 110 provided in the cell block 100 may be connected in series and/or in parallel. As an example, the plurality of battery cells 110 may be connected in series with each other. As an example, the plurality of battery cells 110 may be connected in parallel with each other. As an example, when a group of two or more battery cells 110 connected in parallel with each other is defined as a bank, one bank comprising two or more battery cells 110 connected in parallel with each other and another bank comprising two or more battery cells 110 connected in parallel with each other may be connected in series.

In exemplary embodiments, the plurality of battery cells 110 provided in the cell block 100 may be arranged in a first horizontal direction (e.g., an X-axis direction), and an individual battery cell 110 may extend in a second horizontal direction (e.g., a Y-axis direction). An electrode lead may be provided at at least one of both ends of the individual battery cell 110 along the second horizontal direction (e.g., the Y-axis direction). Electrode leads of neighboring battery cells 110 among the plurality of battery cells 110 may be electrically and physically connected to each other.

The cell block 100 may comprise a first side surface and a second side surface opposite to each other in the first horizontal direction (e.g., the X-axis direction), a front surface and a rear surface opposite to each other in the second horizontal direction (e.g., the Y-axis direction), and a bottom surface and an upper surface opposite to each other in a vertical direction (e.g., a Z-axis direction). The front surface of the cell block 100 may comprise front surfaces of the plurality of battery cells 110, and the rear surface of the cell block 100 may comprise rear surfaces of the plurality of battery cells 110. The bottom surface of the cell block 100 may comprise bottom surfaces of the plurality of battery cells 110, and the upper surface of the cell block 100 may comprise upper surfaces of the plurality of battery cells 110.

The cell case 120 may be made of a laminate sheet having a multilayer structure. For example, the laminate sheet may comprise an internal insulation layer, a metal layer, and an external insulation layer that are sequentially stacked. The internal insulation layer may be made of a thermoplastic resin. For example, the internal insulation layer may be made of a polypropylene resin. For example, the metal layer may comprise aluminum. For example, the external insulation layer may be made of a polyethylene terephthalate resin.

The cell case 120 may provide an accommodation space for accommodating the electrode assembly 111. The cell case 120 may comprise a sealing portion 130 for sealing the accommodation space in which the electrode assembly 111 is accommodated. The sealing portion 130 of the cell case 120 may extend along at least a portion of an edge portion of the cell case 120. When manufacturing the cell case 120, after folding a single sheet such that a first portion and a second portion of the single sheet overlap each other, an edge portion of the first portion of the single sheet and an edge portion of the second portion of the single sheet may be heat-sealed. The sealing portion 130 of the cell case 120 may correspond to a portion where the edge portion of the first portion of the single sheet and the edge portion of the second portion of the single sheet are heat-sealed.

The sealing portion 130 of the cell case 120 may comprise a first sealing portion 131 provided at a bottom portion 121 of the cell case 120, a second sealing portion 133 provided at a first end 123 of the cell case 120 along the second horizontal direction (e.g., the Y-axis direction), and a third sealing portion 135 provided at a second end 125 of the cell case 120 along the second horizontal direction (e.g., the Y-axis direction). An upper portion 127 of the cell case 120 may correspond to a folded portion of the first portion and the second portion of the single sheet constituting the cell case 120.

The first sealing portion 131 of the cell case 120 may have a folded form. In exemplary embodiments, the first sealing portion 131 of the cell case 120 may have a form folded at least once with the second horizontal direction (e.g., the Y-axis direction) as a rotation axis.

In the individual battery cell 110, a first electrode lead 113 connected to the electrode assembly 111 may protrude to the outside of the cell case 120 through the first sealing portion 131 of the cell case 120, and a second electrode lead 115 connected to the electrode assembly 111 may protrude to the outside of the cell case 120 through the second sealing portion 133 of the cell case 120.

The cell block 100 may further comprise a plurality of inter-cell pads 180. The plurality of inter-cell pads 180 may each be disposed between two neighboring battery cells 110 among the plurality of battery cells 110. The individual inter-cell pad 180 may have a flat plate form extending generally in the second horizontal direction (e.g., the Y-axis direction) and the vertical direction (e.g., the Z-axis direction). The plurality of inter-cell pads 180 may be spaced apart from each other in the first horizontal direction (e.g., the X-axis direction), and at least one battery cell 110 may be disposed between two adjacent inter-cell pads 180. The individual inter-cell pad 180 may be attached to an adjacent battery cell 110 by an adhesive member such as a tape or a resin. One side surface of the individual inter-cell pad 180 may be attached to a facing battery cell 110, and the other side surface of the individual inter-cell pad 180 may be attached to a facing battery cell 110.

In exemplary embodiments, the individual inter-cell pad 180 may be disposed between two neighboring battery cells 110 and configured to prevent heat transfer between the two battery cells 110. In addition, the individual inter-cell pad 180 may be in close contact with a side portion of the battery cell 110 to support the battery cell 110. The individual inter-cell pad 180 may support the battery cell 110 to suppress deformation of the battery cell 110 due to swelling of the battery cell 110. In exemplary embodiments, the inter-cell pad 180 may be configured to elastically deform by an external force and configured to support a corresponding battery cell 110. When the thickness of the battery cell 110 along the first horizontal direction (e.g., the X-axis direction) increases due to swelling of the battery cell 110, the inter-cell pad 180 may be elastically deformed to absorb or disperse a force acting due to swelling of the corresponding battery cell 110. In exemplary embodiments, the inter-cell pad 180 may comprise polyurethane, silicon, or a combination thereof.

The module case 210 may support the cell block 100 and may surround the cell block 100. The module case 210 may comprise a bottom plate 211 facing a bottom surface of the cell block 100, a first side plate 212 facing a first side surface of the cell block 100, a second side plate 213 facing a second side surface of the cell block 100, and a top plate 214 facing an upper surface of the cell block 100. A lower edge of the first side plate 212 and a lower edge of the second side plate 213 may be coupled to the bottom plate 211, and an upper edge of the first side plate 212 and an upper edge of the second side plate 213 may be coupled to the top plate 214. The bottom plate 211 and the top plate 214 may each extend generally in the first horizontal direction (e.g., the X-axis direction) and the second horizontal direction (e.g., the Y-axis direction). The first side plate 212 and the second side plate 213 may each extend generally in the vertical direction (e.g., the Z-axis direction) and the second horizontal direction (e.g., the Y-axis direction).

The rear frame 230 may face the rear surface of the cell block 100. The rear frame 230 may be coupled to the module case 210 to cover the rear surface of the cell block 100. The rear frame 230 may be a single frame or an assembly of a plurality of frames. In exemplary embodiments, a busbar frame supporting a plurality of busbars coupled to first electrode leads 113 of the battery cells 110 may be disposed between the rear frame 230 and the cell block 100.

The rear frame 230 may comprise a plurality of gas discharge holes 231 configured to discharge gas generated from the battery cells 110 of the cell block 100 to the outside of the battery module 10. The plurality of gas discharge holes 231 may each penetrate the rear frame 230 in the second horizontal direction (e.g., the Y-axis direction). The plurality of gas discharge holes 231 may allow an internal space of the battery module 10 provided between the rear frame 230 and the cell block 100 to communicate with a space outside the battery module 10.

The front frame 250 may face the front surface of the cell block 100. The front frame 250 may be coupled to the module case 210 to cover the front surface of the cell block 100. The front frame 250 may be a single frame or an assembly of a plurality of frames. In exemplary embodiments, a busbar frame supporting a plurality of busbars coupled to second electrode leads 115 of the battery cells 110 may be disposed between the front frame 250 and the cell block 100.

The adhesive layer 310 may be interposed between the bottom plate 211 and the bottom surface of the cell block 100. The adhesive layer 310 may attach the cell block 100 to the bottom plate 211. For example, the adhesive layer 310 may comprise a resin. In exemplary embodiments, the adhesive layer 310 may comprise a thermal resin or a thermal interface material.

When the cell block 100 is mounted on the module case 210, the first sealing portion 131 of the cell case 120 of the battery cell 110 may face the bottom plate 211. The adhesive layer 310 may be in contact with the first sealing portion 131 of the cell case 120 and may extend along the first sealing portion 131 of the cell case 120. Since the first sealing portion 131 of the cell case 120 is in contact with and fixed to the adhesive layer 310, it is possible to suppress the sealing of the first sealing portion 131 of the cell case 120 from being broken upon ignition of the battery cell 110. For example, when assembling the battery module 10, the cell block 100 may be mounted on the bottom plate 211 of the module case 210 to which a liquid adhesive material has been applied, and the adhesive material may be cured. The cured adhesive material may become the adhesive layer 310, and the adhesive layer 310 may be in contact with and fixed to the first sealing portion 131 of the cell case 120.

The fire extinguishing cover 330 may cover at least a portion of the cell block 100. The fire extinguishing cover 330 may be configured to extinguish a flame generated upon ignition of the battery cell 110. The fire extinguishing cover 330 may be a sheet or film having a generally uniform thickness. The thickness of the fire extinguishing cover 330 may range from several millimeters.

The fire extinguishing cover 330 may comprise a fire extinguishing agent having a fire extinguishing effect. In exemplary embodiments, the fire extinguishing agent may comprise a powder fire extinguishing agent and/or a liquid fire extinguishing agent. The powder fire extinguishing agent may comprise a first-class fire extinguishing powder having sodium bicarbonate (NaHCO₃) as a main component, a second-class fire extinguishing powder having potassium bicarbonate (KHCO₃) as a main component, a third-class fire extinguishing powder having ammonium phosphate (NH₄H₂PO₄) as a main component, and a fourth-class fire extinguishing powder having a reaction product of potassium bicarbonate and urea as a main component. For example, the liquid fire extinguishing agent may comprise sodium bicarbonate, ammonium phosphate, a surfactant, and an antifreeze.

The fire extinguishing cover 330 may extend along the upper surface and the rear surface of the cell block 100 and may have a bent form. The fire extinguishing cover 330 may comprise an upper cover portion 331 between the upper surface of the cell block 100 and the top plate 214 of the module case 210, and a side cover portion 333 between the rear surface of the cell block 100 and the rear frame 230. The upper cover portion 331 may at least partially cover the upper surface of the cell block 100. The side cover portion 333 may at least partially cover the rear surface of the cell block 100. The upper cover portion 331 may be attached to the top plate 214 of the module case 210 and/or the upper surface of the cell block 100.

The side cover portion 333 of the fire extinguishing cover 330 may comprise a plurality of slits 335. The plurality of slits 335 may be spaced apart from each other along the first horizontal direction (e.g., the X-axis direction), and the plurality of slits 335 may each extend in the vertical direction (e.g., the Z-axis direction). The plurality of slits 335 of the side cover portion 333 may each accommodate a portion of a corresponding battery cell 110 among the plurality of battery cells 110. In exemplary embodiments, the plurality of slits 335 of the side cover portion 333 may each accommodate a first end 123 of the cell case 120 of a corresponding battery cell 110 along the second horizontal direction (e.g., the Y-axis direction). Since ends of the plurality of battery cells 110 are inserted into the plurality of slits 335 of the side cover portion 333, the side cover portion 333 of the fire extinguishing cover 330 may be fixed to the plurality of battery cells 110, and the plurality of battery cells 110 may protrude to the outside of the side cover portion 333.

FIG. 6 is a plan view illustrating a portion of a battery module 10 according to exemplary embodiments.

Referring to FIG. 1 to FIG. 6, the battery module 10 may comprise an insulating filling layer 350 that at least partially fills a space between the front surface of the cell block 100 and the front frame 250. The insulating filling layer 350 may be electrically non-conductive. The insulating filling layer 350 may comprise a resin. The insulating filling layer 350 may be in contact with the third sealing portion 135 of the cell case 120 of the battery cell 110 and may extend along the third sealing portion 135 of the cell case 120 of the battery cell 110. The insulating adhesive layer 310 may be in contact with the second electrode lead 115 protruding through the third sealing portion 135 of the cell case 120. Since the third sealing portion 135 of the cell case 120 is in contact with and fixed to the insulating filling layer 350, it is possible to suppress the sealing of the third sealing portion 135 of the cell case 120 from being broken upon ignition of the battery cell 110. For example, when assembling the battery module 10, a liquid resin may be injected into a space between the front surface of the cell block 100 and the front frame 250, and the liquid resin may be cured. The cured resin may become the insulating filling layer 350, and the insulating filling layer 350 may be in contact with and fixed to the third sealing portion 135 of the cell case 120.

In general, when ignition and/or thermal runaway occurs in the battery cell 110, the sealing of the sealing portion 130 of the cell case 120 is broken, and gas and flame are discharged to the outside of the cell case 120 through a portion where the sealing of the sealing portion 130 of the cell case 120 is broken. When gas and flame generated upon occurrence of ignition and/or thermal runaway in the battery cell 110 are discharged from the battery cell 110 in multiple directions, there is difficulty in controlling the gas and the flame at a module level and a pack level.

According to the battery module 10 according to exemplary embodiments, since the first sealing portion 131 of the cell case 120 provided at the bottom of the battery cell 110 is in contact with and fixed to the adhesive layer 310 and the third sealing portion 135 of the cell case 120 provided at one end of the battery cell 110 is in contact with and fixed to the insulating filling layer 350, when ignition and/or thermal runaway occurs in the battery cell 110, the sealing is broken at the second sealing portion 133 of the cell case 120 provided at the other end of the cell case 120. Therefore, gas and flame generated when ignition and/or thermal runaway occurs in the battery cell 110 may be discharged to the outside of the battery cell 110 through a portion where the sealing is broken at the second sealing portion 133 of the cell case 120, and may be discharged to a rear side of the battery module 10 through the gas discharge hole 231 of the rear frame 230. According to the battery module 10 according to exemplary embodiments, since directional venting that discharges gas and flame in a specific direction can be achieved, the gas and the flame can be efficiently controlled at a module level and a pack level.

According to the battery module 10 according to exemplary embodiments, since the fire extinguishing cover 330 configured to extinguish a flame generated upon ignition of the battery cell 110 is disposed at an end of the battery cell 110 to which gas venting is directed, the ignition of the battery cell 110 can be effectively mitigated.

### (Second Embodiment)

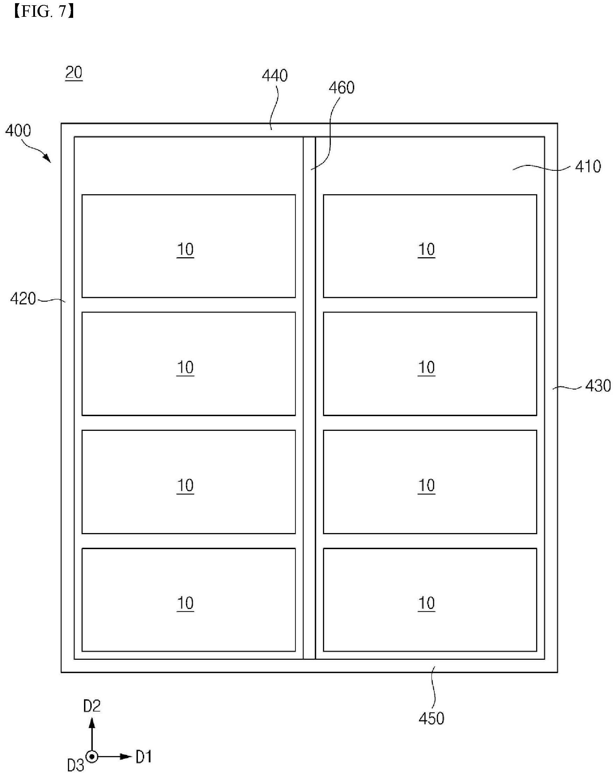

FIG. 7 is a plan view illustrating a battery pack 20 according to exemplary embodiments.

Referring to FIG. 7 together with FIG. 1 to FIG. 6, the battery pack 20 may comprise a pack housing 400 and a plurality of battery modules 10.

The pack housing 400 may provide an internal space for accommodating the plurality of battery modules 10. The pack housing 400 may comprise a base frame 410, a first side frame 420, a second side frame 430, a pack front frame 440, and a pack rear frame 450.

The base frame 410 may support the plurality of battery modules 10. The base frame 410 may have a flat plate form extending in a first direction (D1) and a second direction (D2) perpendicular to each other. An upper surface of the base frame 410 may be a plane perpendicular to a third direction (D3).

The first side frame 420 may be coupled to a periphery of the base frame 410. The first side frame 420 may extend in the second direction (D2) along an edge of the base frame 410. The first side frame 420 may face a side portion of at least one corresponding battery module 10 among the plurality of battery modules 10.

The second side frame 430 may be coupled to the periphery of the base frame 410. The second side frame 430 may be spaced apart from the first side frame 420 in the first direction (D1). The second side frame 430 may extend in the second direction (D2) along the edge of the base frame 410. The second side frame 430 may face a side portion of at least one corresponding battery module 10 among the plurality of battery modules 10.

The pack front frame 440 may be coupled to the base frame 410. The pack front frame 440 may extend along a front edge of the base frame 410. The pack front frame 440 may extend in the first direction (D1) between the first side frame 420 and the second side frame 430.

The pack rear frame 450 may be coupled to the base frame 410. The pack rear frame 450 may extend along a rear edge of the base frame 410. The pack rear frame 450 may extend in the first direction (D1) between the first side frame 420 and the second side frame 430. The pack rear frame 450 may be spaced apart from the pack front frame 440 in the second direction (D2) with the plurality of battery modules 10 interposed therebetween.

The pack rear frame 450, the pack front frame 440, the first side frame 420, and the second side frame 430 may constitute a rectangular-ring-shaped peripheral wall surrounding the plurality of battery modules 10. The pack housing 400 may further comprise a pack cover (not shown) coupled on the pack rear frame 450, the pack front frame 440, the first side frame 420, and the second side frame 430 to cover the plurality of battery modules 10.

The pack housing 400 may further comprise a center beam 460. The center beam 460 may be disposed on the base frame 410. The center beam 460 may extend in the second direction (D2) between the pack front frame 440 and the pack rear frame 450.

The plurality of battery modules 10 may be mounted on the base frame 410. The plurality of battery modules 10 may be arranged in the first direction (D1) and/or the second direction (D2) on the base frame 410. The plurality of battery modules 10 may be arranged to form a plurality of columns. Battery modules 10 belonging to the same column may be arranged in the second direction (D2). In exemplary embodiments, the plurality of battery modules 10 may comprise battery modules 10 of a first column and battery modules 10 of a second column. The center beam 460 may be disposed between the battery modules 10 of the first column and the battery modules 10 of the second column. The battery modules 10 of the first column may be closer to the first side frame 420 than to the second side frame 430, and the battery modules 10 of the second column may be closer to the second side frame 430 than to the first side frame 420.

In exemplary embodiments, battery modules 10 belonging to the same column may be configured to vent gas in the same direction.

In exemplary embodiments, the plurality of battery modules 10 may each be configured to vent gas toward the outside of the battery pack 20. The battery modules 10 of the first column may each be mounted on the pack housing 400 such that the pack rear frame 450 provided with the gas discharge hole 231 faces the first side frame 420, and the battery modules 10 of the second column may each be mounted on the pack housing 400 such that the pack rear frame 450 provided with the gas discharge hole 231 faces the second side frame 430. The battery modules 10 of the first column may vent gas toward the first side frame 420, and the battery modules 10 of the second column may vent gas toward the second side frame 430.

In exemplary embodiments, the plurality of battery modules 10 may each be configured to vent gas toward a central portion of the battery pack 20. The battery modules 10 of the first column may each be mounted on the pack housing 400 such that the pack rear frame 450 provided with the gas discharge hole 231 faces the center beam 460 or the second side frame 430, and the battery modules 10 of the second column may each be mounted on the pack housing 400 such that the pack rear frame 450 provided with the gas discharge hole 231 faces the center beam 460 or the first side frame 420. The battery modules 10 of the first column and the battery modules 10 of the second column may vent gas toward a central space of the pack housing 400 provided between the battery modules 10 of the first column and the battery modules 10 of the second column.

According to exemplary embodiments, since the battery module 10 has a directional venting function configured to vent gas in a specific direction, gas and flame can be efficiently controlled within the battery pack 20 comprising the plurality of battery modules 10.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

### [Description of Reference Numerals]

10: battery module
20: battery pack
100: cell block
110: battery cell
111: electrode assembly
113: first electrode lead
115: second electrode lead
120: cell case
130: sealing portion
180: inter-cell pad
210: module case
211: bottom plate
212: first side plate
213: second side plate
214: top plate
230: rear frame
231: gas discharge hole
250: front frame
310: adhesive layer
330: fire extinguishing cover
331: upper cover portion
333: side cover portion
335: slit
350: insulating filling layer
400: pack housing

## Claims

1. A battery module comprising:
a cell block comprising a plurality of battery cells;
a module case comprising a bottom plate facing a bottom surface of the cell block, a first side plate facing a first side surface of the cell block, a second side plate facing a second side surface of the cell block, and a top plate facing an upper surface of the cell block;
a front frame facing a front surface of the cell block;
a rear frame facing a rear surface of the cell block and comprising a gas discharge hole; and
a fire extinguishing cover comprising an upper cover portion between the upper surface of the cell block and the top plate, and a side cover portion between the rear surface of the cell block and the rear frame.

2. The battery module of claim 1, wherein the side cover portion of the fire extinguishing cover comprises a plurality of slits, and
wherein the plurality of slits of the side cover portion of the fire extinguishing cover each accommodate one end of a corresponding battery cell among the plurality of battery cells.

3. The battery module of claim 1, further comprising an insulating filling layer that at least partially fills a space between each of the plurality of battery cells and the front frame.

4. The battery module of claim 3, wherein each of the plurality of battery cells comprises a cell case having an accommodation space for accommodating an electrode assembly, wherein the cell case comprises a sealing portion for sealing the accommodation space of the cell case, and
wherein the insulating filling layer is in contact with the sealing portion of the cell case.

5. The battery module of claim 4, wherein each of the plurality of battery cells further comprises an electrode lead protruding to the outside of the cell case through a portion of the sealing portion of the cell case in contact with the insulating filling layer.

6. The battery module of claim 3, wherein the insulating filling layer comprises a resin.

7. The battery module of claim 1, further comprising an adhesive layer provided between the bottom plate and the cell block and attaching the cell block to the bottom plate,
wherein each of the plurality of battery cells comprises a cell case having an accommodation space for accommodating an electrode assembly, wherein the cell case comprises a sealing portion for sealing the accommodation space of the cell case, and
wherein the adhesive layer is in contact with the sealing portion of the cell case.

8. The battery module of claim 1, further comprising:
an insulating filling layer that at least partially fills a space between each of the plurality of battery cells and the front frame; and
an adhesive layer provided between the bottom plate and the cell block and attaching the cell block to the bottom plate.

9. The battery module of claim 8, wherein each of the plurality of battery cells comprises a cell case having an accommodation space for accommodating an electrode assembly, a first electrode lead protruding from a first end of the cell case facing the rear frame, and a second electrode lead protruding from a second end of the cell case facing the front frame,
wherein the cell case comprises a sealing portion for sealing the accommodation space of the cell case, and
wherein the sealing portion of the cell case comprises:
a first sealing portion provided at a bottom of the cell case facing the bottom plate and in contact with the adhesive layer;
a second sealing portion provided at the first end of the cell case; and
a third sealing portion provided at the second end of the cell case and in contact with the insulating filling layer.

10. The battery module of claim 1, wherein the fire extinguishing cover contains a fire extinguishing material.

11. The battery module of claim 1, wherein the plurality of battery cells are arranged in a first direction, and
wherein the cell block further comprises an inter-cell pad disposed between two adjacent battery cells among the plurality of battery cells.

12. A battery pack comprising:
a pack housing; and
a battery module mounted on the pack housing,
wherein the battery module comprises:
a cell block comprising a plurality of battery cells;
a module case comprising a bottom plate facing a bottom surface of the cell block, a first side plate facing a first side surface of the cell block, a second side plate facing a second side surface of the cell block, and a top plate facing an upper surface of the cell block;
a front frame facing a front surface of the cell block;
a rear frame facing a rear surface of the cell block and comprising a gas discharge hole;
an insulating filling layer that at least partially fills a space between each of the plurality of battery cells and the front frame;
an adhesive layer provided between the bottom plate and the cell block and attaching the cell block to the bottom plate; and
a fire extinguishing cover provided between the upper surface of the cell block and the top plate and between the rear surface of the cell block and the rear frame.

13. The battery pack of claim 12, wherein the fire extinguishing cover comprises a plurality of slits, and
wherein the plurality of slits of the fire extinguishing cover each accommodate one end of a corresponding battery cell among the plurality of battery cells.

14. The battery pack of claim 12, wherein each of the plurality of battery cells comprises a cell case having an accommodation space for accommodating an electrode assembly, a first electrode lead protruding from a first end of the cell case facing the rear frame, and a second electrode lead protruding from a second end of the cell case facing the front frame,
wherein the cell case comprises a sealing portion for sealing the accommodation space of the cell case, and
wherein the sealing portion of the cell case comprises:
a first sealing portion provided at a bottom of the cell case facing the bottom plate and in contact with the adhesive layer;
a second sealing portion provided at the first end of the cell case; and
a third sealing portion provided at the second end of the cell case and in contact with the insulating filling layer.

15. The battery pack of claim 14, wherein the adhesive layer extends along the first sealing portion of the cell case, and
wherein the insulating filling layer extends along the third sealing portion of the cell case.
